Europäisches Patentamt

(19) European Patent Office

Office européen des brevets

(11) Publication number: **0 132 893**

**A1**

(12) **EUROPEAN PATENT APPLICATION**

(21) Application number: **84201080.3**

(22) Date of filing: **20.07.84**

(51) Int. Cl.⁴: **C 08 F 10/00**
**C 08 F 4/64**

(30) Priority: **21.07.83 US 516178**
**26.09.83 US 535969**

(43) Date of publication of application:
**13.02.85 Bulletin 85/7**

(84) Designated Contracting States:
**AT BE CH DE FR GB IT LI NL SE**

(71) Applicant: **STAUFFER CHEMICAL COMPANY**

**Westport Connecticut 06880(US)**

(72) Inventor: **Band, Elliot Isaac**
**23 Hatch Terrace**
**Dobbs Ferry, NY 10522(US)**

(72) Inventor: **Breen, Michael Joseph**
**RR 1, Box 646**
**Campbell Hall,NY 10916(US)**

(72) Inventor: **Mink, Robert Ivan**
**15 Nassau Road - Apt. 2**
**Yonkers, NY 10710(US)**

(72) Inventor: **Via, Francis Anthony**
**2389 Ridge Street**
**Yorktown Heights, NY 10598(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Olefin polymerization catalyst and process.

㊱ Isotactic index improvement is achieved for $C_3$ and higher
alpha olefins in systems containing a catalyst component
comprising titanium supported on a magnesium halide sup-
port. The titanium component is formed by copulverizing the
magnesium halide with one or more eletron donor followed
by treatment with liquid titanium halide. The improvement is
achieved by using a dialkylaluminum monohalide component
with the trialkylaluminum cocatalyst normally used. In non-
slurry polymerizatins improvements in both activity and
isotactic index have been achieved. In slurry polymerizations,
the isotactic index of the polymer has been improved. It is
possible to achieve a variable melt flow index for polyp-
ropylene while maintaining good isotactic index. Isotactic
index is retained at high levels even though the temperature
and/or time of polymerization is varied.

EP 0 132 893 A1

## OLEFIN POLYMERIZATION CATALYST
## AND PROCESS

### Related Application

The present invention is a continuation-in-part of U.S. Application Serial No. 516,178, filed July 21, 1983.

### Background of the Invention

The present invention relates to a catalyst for the polymerization of alpha olefins, such as propylene.

It is known to polymerize alpha olefins, such as propylene, using a catalyst component comprising titanium on a magnesium halide support, the component being obtained by copulverizing magnesium halide with at least one electron donor to form a copulverized product followed by reacting the copulverized product with a liquid titanium compound containing halogen. Such a component is then used in the polymerization reaction with a trialkylaluminum co-catalyst, e.g., triethylaluminum. An example of such a procedure is shown in co-pending U. S. Application Serial No. 405,977, filed August 9, 1982, which is incorporated herein by reference.

The use of halogen containing organoaluminum co-catalyst components, e.g., dialkylaluminum monohalides, such as diethylaluminum chloride, has been suggested for use in addition to the trialkylaluminum cocatalyst in conjunction with certain types of magnesium chloride supported catalysts containing titanium to, in general,

CIP of C-7224

increase the activity of the catalyst, e.g., U.S. Patent No. 4,234,710 to C. W. Moberly et al. That patent, however, indicates that, although the activity increases, the isotactic index of the resulting polymer (as indicated by the disclosed xylene solubles content) either decreased of stayed approximately the same.

Summary of the Present Invention

The present invention relates to a novel catalyst combination which comprises a trialkylaluminum/dialkylaluminum monohalide combination which unexpectedly gives increased isotactic index to the resulting polypropylene produced using it. This is unexpected since the general teaching in the art is that a dialkylaluminum monohalide was an effective activity promoter but had either little effect, or a deleterious effect, on the isotactic index of the resulting polymer when certain types of titanium containing catalysts were used (e.g., U.S. Patent No. 4,234,710). It has also been found that it is possible to achieve a variable melt flow index while having a substantially constant isotactic index of good value. There is good retention of isotactic index for the system even though the temperature and/or time of polymerization is varied.

Detailed Description of the Present Invention

The catalyst of the present invention comprises: (a) a magnesium chloride-supported titanium-containing component; and (b) an organoaluminum cocatalyst combination, preferably with an electron donor.

CIP of C-7224

Component (a) in the catalyst is a magnesium chloride-containing material which is formed by copulverizing magnesium chloride with one or more electron donors (Lewis bases) to form a copulverized product which is then contacted with a liquid titanium compound containing halogen. The types of electron donor materials which can be used are organic compounds containing O, N, S, or P moieties which share electrons. Some representative donor materials which can be used include phenol compounds, aliphatic and aromatic ethers, aliphatic and aromatic carboxylic esters, alcohols, aldehydes, ketones, aliphatic and aromatic carboxylic acids, lactones, polysiloxanes and carboxylic acyl halides. Representative donor materials suitable for activating the magnesium chloride support material are known in the art. Preferably, the donors used include phenol compounds, polysiloxanes and esters of a carboxylic acid (e.g., ethyl benzoate) as described in U. S. Serial No. 405,977, above . The copulverization step can include $TiCl_4$ (e.g., as a complex with one or more of the donors). The amount of donor material used can range from about 0.05 to 3 times the weight of the magnesium chloride.

After the copulverized magnesium chloride/donor material has been formed by suitable grinding for a suitable length of time (e.g., 0.5 hr. to about 30 days), the product is treated with a liquid titanium halide, such as $TiCl_4$. The liquid titanium compound containing halogen is contacted with the activated magnesium halide at elevated temperature, (e.g., 60°C. to about 120°C.). The amount of titanium halide used can be varied quite widely, e.g., about 0.5 to 500 times the weight of the solid being treated.

The component (b) used in the present invention is a mixture of trialkylaluminum and a dialkylaluminum monohalide cocatalyst combination preferably with a suitable electron donor for the mixture (e.g., an ester of carboxylic acid).

The trialkylaluminum material has been conventionally used alone with the type of magnesium chloride component described before and includes such compounds as triethylaluminum, tri-n-butylaluminum, triisobutyl aluminum, and trihexylaluminum. The molar amount used preferably ranges from about 200:1 to about 10:1 based on the titanium content of component (a). The molar ratio of donor to component (a) can range from 1:15 to 1:1.

A novel addition to component (b), in accordance with the present invention, is a dialkylaluminum monohalide, such as diethylaluminum chloride, diethylaluminum bromide, and dibutylaluminum chloride. The total aluminum can be in a molar ratio of from about 10:1 to about 600:1 based on the moles of Ti in component (a). The mole ratio of trialkylaluminum to dialkylaluminum monohalide component can range from 5:1 to 1:5, preferably from about 5:1 to about 1:1. When the amount of dialkylaluminum halide is less than the amount of trialkylaluminum

CIP of C-7224

compound, both activity and isotactic index improvement in the polymerization of propylene have been noted when bulk polymerization is used. Preferably, the molar ratio of alkyl to halogen in the cocatalyst ranges from about 3:1 to about 30:1, most preferably about 4:1 to 8:1.

The types of donors useful with component (b) can be the conventional donors used with organoaluminum (e.g., the alkyl esters of aromatic carboxylic acids, which are preferred). Representative donors include methyl toluate, ethyl anisate and ethyl benzoate. The molar ratio of donor to the organoaluminum portion of component (b) used can range from about 1:15 to 1:1.

The catalyst of the present invention (Ti containing component plus trialkylaluminum/dialkylaluminum monohalide has been found to increase the isotactic index of polypropylene when utilized as compared to a similar catalyst system not containing the dialkylaluminum halide. In polymerizations (e.g., bulk polymerizations) which substantially no hydrocarbon solvent is used to form the slurry for the olefin (e.g., propylene), it has also been found that the activity of the present catalyst is higher than one lacking dialkylaluminum monohalide cocatalyst, e.g., when the halogen containing cocatalyst component is present at a lower amount than the amount of trialkylaluminum. The catalyst in slurry polymerizations has been found to result in an increase in the isotactic index of the polymer as compared to an analogous catalyst lacking the dialkylaluminum monohalide component. In slurry polymerizations it has also been shown that the isotactic index does not decrease for systems containing an anisate electron donor for the cocatalyst as the

CIP of C-7224

temperature is increased. In analogous systems lacking the dialkylaluminum monohalide component with a toluate electron donor, the isotactic index decreased

The following Examples are intended to further describe the present invention for purposes of further illustration.

CIP of C-7224

## EXAMPLE 1

This Example illustrates preparation of the titanium tetrachloride·ethyl benzoate complex used in the preparation of a particularly preferred catalyst in accordance with the present invention. The use of this complex is preferred but not required.

A 3-liter (L) three-necked flask was equipped with a gas inlet valve, a mechanical stirrer bearing driving a paddle made of TEFLON fluorocarbon polymer, and a 250-ml pressure equalizing dropping funnel. To this flask was added 1.5 L heptane (Phillips 99.9%) and 190 ml (1.73 mol) distilled TiCl₄ under rapid stirring followed by the slow addition of 245 ml (1.72 mol) ethyl benzoate (Aldrich 99+%) during a one-hour period. A yellow precipitate of the complex formed immediately. The mixture was stirred for two hours at ambient conditions. After transfer of the flask to a Vacuum Atmospheres Co. glove box under nitrogen, the mixture was filtered, washed with two liters heptane, and vacuum dried for about 17 hours. The yield approached theoretical.

CIP of C-7224

## EXAMPLE 2

This Example illustrates preparation of the copulverized, supported component containing titanium of the present invention.

Into a 6.2 L (Paul Abbe) jar mill was placed 500 g. $MgCl_2$ vacuum-dried under heat containing about 1 percent water and 8.0 kg of 1.6-cm diameter (5/8-inch) stainless steel balls. This charge was milled for five days at about 50 rpm. The activated powder was separated from the milling balls by means of a No. 30 sieve.

The 8.0 kg of stainless steel balls, 1.6 cm diameter and 250 g (2.62 mol) of activated $MgCl_2$ were recharged into the same mill along with 255 g of phenol (2.71 mol) and 37.5 ml 96-100 millipoise silicone oil (General Electric Co. SF 96-100). Milling at about 50 rpm was carried out for another five days. Then 132 g of the $TiCl_4$·ethyl benzoate complex of Example 1 was added to the charge and the new mixture milled for yet another five days (total 15 days). The orange-red product was then sieved thru a No. 30 screen to separate the product from the milling balls. The yield was 540 g.

Inside a glove box under nitrogen, 212 gm. of the milled product was charged into a 2 L, three-necked flask equipped with a 250-ml pressure equalizing dropping funnel, gas-inlet valve, and mechanical stirrer shaft. With stirring, under nitrogen, 625 ml toluene was transferred into the reaction flask by cannula followed by the addition of 375 ml (3.41 mol) $TiCl_4$ also by cannula. The reaction mixture was stirred at about 100 rpm as the flask was slowly heated to 90°C. by an oil bath.

CIP of C-7224

EXAMPLE 2 (cont'd.)

After temperature equilibration for about one hour, the reaction was continued at about 90°C. for an additional three hours. The reaction flask was then cooled to ambient conditions over 45 minutes during which the solid phase settled, whereupon the supernatant liquid was removed by cannula. Then 1 L toluene was added with mild stirring, about 40 rpm, to wash the solid for ten minutes. After a settling time of a half-hour, the supernatant liquid was again removed by cannula. The washing was repeated once more with toluene and five times more with heptane (all washes 1 L). The washings were followed by transfer of the orange slurry to a 1 L, three-neck flask with additional heptane. The supernatant was removed by cannula; remaining heptane evaporated under vacuum. After sieving through a No. 140 screen, the yield from this $TiCl_4$ extraction process was 92 g of orange/brown powder (catalyst component (a)).

CIP of C-7224

## EXAMPLE 3

This Example illustrates the general procedure for the bulk polymerization of an olefin (propylene) employing the novel catalyst of this invention.

Into a 10 L stirred reactor equipped with a heater, means for temperature control, and gas inlet and outlet lines were added, in order (as described on the Table given below) triethylaluminum (TEAL), diethylaluminum chloride (where used) (DEAC), and either ethyl anisate (EA) or methyl p-toluate (MPT), 75 mg of the novel catalyst prepared in Example 2, and 1 psi hydrogen as a polymerization moderator. The reactor was stirred at an agitation rate of 400 rpm. Then 8 L of liquid polypropylene was added and brought to 80°C. The standard polymerization test was run for 2 hours. At the end of the polymerization time, excess propylene was vented from the reactor. The polymer was collected, dried at 70°C. and weighed to give the amount of dry polymer.

The Table which follows sets forth the results obtained for a series of reactions thus run. In the Table the amount of TEAL, DEAC, MPT and EA in the co-catalyst is given in millimoles in all cases.

Catalytic activity in gm/gm catalyst component (a) calculated in the Table as:

$$\frac{\text{wt. dried polymer (gm.) plus heptane soluble polymer (gm.)}}{\text{wt. catalyst component (a) (gm.)}}$$

CIP of C-7224

- 11 -

EXAMPLE 3 (cont'd.)

Isotactic Index (II) in the Table is calculated as: the fraction of total polymer insoluble in boiling heptane for three hours (termed "$C_7$") multiplied by the amount of dried, isolated polymer, multiplied by 100 and divided by total polymer produced, that is:

$$II = \frac{"C_7" \times dry\ polymer}{total\ polymer} \times 100$$

TABLE I

| Run No. | TEAL | DEAC | MPT | EA | Activity/II |
|---|---|---|---|---|---|
| 1* | 9 | -- | 3 | -- | 14516/96.3 |
| 2* | 9 | -- | -- | 2.1 | 25286/89.7 |
| 3 | 16.5 | 12.0 | -- | 6.8 | 29904/96.3 |
| 4 | 5.2 | 3.8 | -- | 2.1 | 34400/96.0 |
| 5 | 5.2 | 3.8 | 2.1 | -- | 23184/97.9 |
| 6 | 3.9 | 5.1 | -- | 2.1 | 26115/96.4 |
| 7 | 9.5 | 4.5 | -- | 2.1 | 29782/96.7 |
| 8 | 5.9 | 3.1 | -- | 2.1 | 31512/95.4 |

* control run.

In order to most clearly see the effect that DEAC has when substituted for a portion of the TEAL normally present, a comparison of Run Nos. 2 and 4 should be made. In No. 4, the activity increased, as compared to No. 2, nearly 41% and, unexpectedly, the II also increased by 4.9 points.

CIP of C-7224

- 12 -

## EXAMPLE 4

This illustrates certain additional runs in which the propylene polymerization takes place for only 1.5 hours at 70°C., as compared to the 2 hour/80°C. conditions used in Example 3. The $H_2$ pressure is given in psig:

## TABLE II

| Run No. | TEAL | DEAC | MPT | EA | $H_2$ | Activity/II |
|---------|------|------|-----|-----|-------|-------------|
| 9* | 9 | -- | 3 | -- | 5 | 15148/95.6 |
| 10 | 5.2 | 3.8 | -- | 2.1 | 1 | 28071/95.3 |
| 11* | 9 | -- | -- | 3 | 5 | 10964/96.2 |

* control run.

CIP of C-7224

## EXAMPLE 5

This Example demonstrates that the novel catalyst of the present invention can be used even at 90°C. to give increased activity and improved isotactic index over control run 1. The polymerization conditions were the same as in Example 3 except that the temperature was 90°C.:

| Run No. | TEAL | DEAC | MPT | EA | ACTIVITY/II |
|---------|------|------|-----|-----|-------------|
| 12 | 5.2 | 3.8 | -- | 2.1 | 24651/96.4 |

CIP of C-7224

## EXAMPLE 6

This Example illustrates the slurry polymerization of propylene in a solvent (heptane) employing the catalyst component of Example 2.

A 4.5 L reactor containing 2 L heptane stirred at 600 rpm was used to carry out a polymerization for 1.5 hours at 65°C. with the reactants added in the following order: TEAL, DEAC (where used), MPT or EA donor, 100 mg catalyst component of Example 2, 3.2 psi (about 1/5 atmosphere) hydrogen moderator, and propylene maintained at 10 atm pressure.

After 1.5 hr. the reactor was vented, the product was filtered, washed, and air-dried. The Table sets forth the results that were obtained with the amount of TEAL, DEAC, MPT and EA being given in millimoles:

| Run No. | TEAL | DEAC | MPT | EA | Activity/II |
|---|---|---|---|---|---|
| 13 | 12 | - | 2.8 | - | 8136/90.2 |
| 14 | 6.9 | 5.1 | 2.8 | - | 6396/92.6 |
| 15 | 12 | - | - | 2.8 | 10139/87.4 |
| 16 | 6.9 | 5.1 | - | 2.8 | 8857/91.3 |
| 17 | 12 | - | - | 0.95 | 11978/74.3 |
| 18 | 6.9 | 5.1 | - | 2.8 | 8857/91.3 |
| 19 | 5.2 | 6.8 | - | 2.8 | 6820/93.2 |

These data illustrate that the substitution of DEAC for some of the TEAL normally present as the cocatalyst results in an increase in isotactic index for the slurry polymerization of propylene.

EXAMPLE 7

This Example illustrates the increased isotactic index and increased activity characteristics of the present invention using an ethyl anisate electron donor for the cocatalyst.

Slurry polymerizations were used as described in Example 6 at the temperatures and times mentioned below using TEAL/DEAC/EA millimole ratios of 6.9/5.1/2.8 and TEAL/MPT millimole ratios of 12/2.8 where indicated:

| No. | TEAL/DEAC/EA (75°C./1.5 hrs) | No. | TEAL/MPT (75°C./1.5 hrs) |
|-----|-------------------------------|-----|---------------------------|
| 20  | 9300/91.7                     | 21  | 9600/85.5                 |

| No. | TEAL/DEAC/EA ( 65°C./1.5 hrs) | No. | TEAL/MPT (65°C./1.5 hrs) |
|-----|-------------------------------|-----|---------------------------|
| 22  | 7400/90.4                     | 23  | 7400/88.6                 |

The TEAL/DEAC/EA system demonstrates activity and II improvement when the temperature is raised from 65°C. to 75°C., whereas in the TEAL/MPT system the II falls when the activity increases.

CIP of C-7224

- 16 -

EXAMPLE 8

A series of bulk polymerization runs were performed in which the hydrogen pressure was varied to vary the melt flow index (MFI) of the resulting polypropylene. The same general procedure shown in Example 3 was employed with the following:  TEAL - 5.2 mmoles; DEAC - 3.8 mmoles; EA - 2.1 mmoles; 80°C. temperature; 2 hr. polymerization; 75 mg. catalyst; and 10 liter reactor. The following results were obtained:

| Run No. | $H_2$ (psig) | Activity/II | MFI |
|---------|--------------|-------------|-----|
| 24 | 1 | 34,400/96.0 | 2.0 |
| 25 | 5 | 33,100/96.0 | 1.6 |
| 26 | 10 | 31,300/95.5 | 6.3 |
| 27 | 20 | 26,300/95.7 | 20.0 |

These data illustrate that by using the present invention it is possible to achieve a variable melt flow index while having a substantially constant isotactic index of good value.

CIP of C-7224

- 17 -

EXAMPLE 9

This Example illustrates the effect of variation
in the TEAL/DEAC ratio on the bulk polymerization of
propylene using 2.1 mmoles of ethyl anisate donor, at
80°C., for 2 hours, and 75 mg of titanium containing
catalyst component

| Run No. | TEAL (mmoles) | DEAC (mmoles) | Et/Cl Ratio | Activity/II |
|---------|---------------|---------------|-------------|-------------|
| 28 | -- | 9.0 | 2.0 | No polymer* |
| 29 | 3.1 | 5.9 | 3.6 | 17,400/96.1 |
| 30 | 3.9 | 5.1 | 4.3 | 26,100/96.4 |
| 31 | 4.5 | 4.5 | 5.0 | 29,800/96.7 |
| 32 | 5.2 | 3.8 | 6.1 | 34,400/96.0 |
| 33 | 5.9 | 3.1 | 7.7 | 31,500/95.4 |
| 34 | 6.5 | 2.5 | 9.8 | 28,600/94.7 |
| 35 | 7.2 | 1.8 | 27.6 | 29,100/93.7 |
| 36 | 9.0 | -- | -- | 25,300/89.7 |

*slurry result as in Example 6.

These data illustrate increase and then later decrease in both isotactic index as well as activity as
the alkyl/halide molar ratio is increased from 2.

CIP of C-7224

EXAMPLE 10

This Example shows the effect of temperature and time on the bulk polymerization of propylene using the present invention. A cocatalyst of TEAL (5.2 mmoles), DEAC (3.8 mmoles), and EA (2.1 mmoles) was employed. The hydrogen pressure was 1 psig, and 75 mg. of catalyst was employed.

| Run No. | Temp. (°C.) | Time (hrs.) | Activity/II |
|---------|-------------|-------------|-------------|
| 45 | 80 | 1.0 | 23,100/96.3 |
| 46 | 80 | 2.0 | 34,400/96.0 |
| 47 | 80 | 3.0 | 35,200/96.4 |
| 48 | 90 | 1.0 | 16,800/96.8 |
| 49 | 90 | 2.0 | 23,200/97.1 |

These data show good retention of isotactic index even though the temperature and/or time of polymerization is varied.

## EXAMPLE 11

This Example illustrates the effect of raising the polymerization temperature during the slurry polymerization of propylene under the conditions recited in Example 6 (TEAL: 6.9 millimoles, DEAC: 5.1 millimoles, EA: 2.8 millimoles).

| Run No. | Temp. (°C.) | Activity/II |
|---------|-------------|-------------|
| 50 | 55 | 5,774/89.3 |
| 51 | 65 | 9,899/92.9 |
| 52 | 75 | 12,047/93.5 |
| 53 | 85 | 10,374/93.8 |

The isotactic index increases with increasing temperature and, in general, the activity also increases as well.

## COMPARATIVE EXAMPLE 12

This Example illustrates the effect of raising the polymerization temperature during the slurry polymerization of propylene under the conditions recited in Example 6 wherein the following cocatalyst system is used: TEAL: 12.0 millimoles and MPT: 3.0 millimoles.

| Run No. | Temp (°C.) | Activity/II |
|---------|-----------|-------------|
| 54 | 55 | 7,460/89.8 |
| 55 | 65 | 10,040/90.9 |
| 56 | 75 | 11,754/89.6 |
| 57 | 85 | 10,264/82.9 |

These data, unlike the data from Example 12, illustrate a decrease in isotactic index as the temperature of polymerization is increased.

As can be seen from the foregoing, the use of dialkylaluminum monohalide, in combination with the trialkylaluminum, results in an improvement in the catalyst performance. In general, the isotactic index improves compared to a catalyst just containing the trialkylaluminum component, the isotactic index is maintained at good levels even as the melt flow index is varied, and the isotactic index is retained at good levels as the temperature of polymerization is increased.

The foregoing Examples illustrate certain embodiments of the present invention but should not be construed in a limiting sense. The scope of protection sought is given in the claims which follow.

What is Claimed:

1. A catalyst for the polymerization of alpha olefins of the formula $CH_2 = CHR$, where R is an alkyl radical of 1-6 carbon atoms and mixtures thereof with ethylene, comprising:

(a) a component containing titanium on a magnesium halide support which is obtained by copulverizing magnesium halide with one or more electron donors to form a copulverized product followed by reacting the copulverized product with a liquid titanium compound containing halogen; and

(b) an organoaluminum component comprising a trialkylaluminum compound in admixture with an effective amount of a dialkylaluminum monohalide component to give improved performance characteristics to the catalyst as compared to when the component consists of trialkylaluminum.

2. A catalyst as claimed in Claim 1 wherein a phenol electron donor is copulverized.

3. A catalyst as claimed in Claim 1 wherein polysiloxane and phenol electron donors are copulverized.

4. A catalyst as claimed in Claim 1 wherein a phenol electron donor, polysiloxane, titanium tetrahalide and a carboxylic ester electron donor are copulverized.

5. A catalyst as claimed in Claim 1 wherein the liquid titanium compound containing halogen is $TiCl_4$.

6. A catalyst as claimed in Claim 4 wherein the organoaluminum component comprises trialkylaluminum and a dialkylaluminum monohalide with a carboxylic ester donor.

CIP of C-7224

7.  A catalyst as claimed in Claim 1 wherein the organoaluminum component contains triethylaluminum and diethylaluminum chloride.

8.  A catalyst as claimed in Claim 5 wherein the organoaluminum component contains triethylaluminum and diethylaluminum chloride.

9.  In the polymerization of alpha olefins of the formula $CH_2 = CHR$, where R is an alkyl radical of $1 - 6$ carbon atoms and mixtures thereof with ethylene, using as a catalyst: (a) a component containing titanium on a magnesium halide support which is obtained by copulverizing magnesium halide with one or more electron donors to form a copulverized product followed by reacting the copulverized product with a liquid titanium compound containing halogen, and (b) a trialkylaluminum component wherein the improvement comprises using an effective amount of a dialkylaluminum monohalide compound in component (b) to give improved performance characteristics to the catalyst as compared to that produced when component (b) consists of trialkylaluminum.

10.  A process as claimed in Claim 9 wherein a phenol electron donor is copulverized.

11.  A process as claimed in Claim 9 wherein polysiloxane and phenol electron donors are copulverized.

12.  A process as claimed in Claim 9 wherein a phenol electron donor, polysiloxane, titanium tetrahalide and a carboxylic ester electron donor are copulverized.

13.  A process as claimed in Claim 9 wherein the liquid titanium compound containing halogen is $TiCl_4$.

14.  A process as claimed in Claim 12 wherein the liquid titanium compound containing halogen is $TiCl_4$.

C-7224

15. A process as claimed in Claim 9 wherein the organoaluminum component contains trialkylaluminum and a diethylaluminum monohalide.

16. A process as claimed in Claim 14 wherein the organoaluminum component contains triethylaluminum and diethylaluminum chloride with a carboxylic ester donor.

17. A catalyst as claimed in Claim 1 wherein a phenol electron donor, a polysiloxane electron donor, $TiCl_4$, and an ester of an aromatic acid are copulverized with the magnesium chloride.

18. A catalyst as claimed in any of Claims 1-8 and 17 where the total amount of aluminum in component (b) ranges from about 10:1 to about 600:1, as a molar ratio, based on the moles of titanium in component (a) and the mole ratio of trialkylaluminum to dialkylaluminum monohalide organoaluminum ranges from about 5:1 to about 1:5.

19. A catalyst as claimed in any of Claims 1-8 and 17-18 wherein the mole ratio of trialkylaluminum to dialkylaluminum monohalide ranges from about 5:1 to about 1:5.

20. A process as claimed in Claim 9 wherein a phenol electron donor, a polysiloxane electron donor, $TiCl_4$, and an ester of an aromatic acid are copulverized with the magnesium chloride.

21. A process as claimed in any of Claims 9-16 and 20 and where the total amount of aluminum in component (b) ranges from about 10:1 to about 600:1, as a molar ratio, based on the moles of titanium in component (a) and the mole ratio of trialkylaluminum to dialkylaluminum monohalide ranges from about 5:1 to about 1:5.

CIP of C-7224

22.  A process as claimed in any of Claims 9-16 and 20-21 wherein the mole ratio of trialkylaluminum to  dialkylaluminum monohalide ranges from about 5:1 to about 1:5.

CIP of C-7224

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 549 793 (STAMICARBON)<br><br>* claims 1-12; page 4, table 1, example IV-VI; page 5, table 2, example A; column 1, lines 38-44 *<br><br>--- | 1,5-9, 15,18, 21,22 | C 08 F 10/00<br>C 08 F 4/64 |
| P,X<br>D | EP-A-0 101 136 (STAUFFER CHEMICAL CY.)<br><br>* claim 1 *<br><br>--- | 2-4,10<br>-12,17<br>,20 | |
| D,X | US-A-4 234 710 (C.W. MOBERLY et al.)<br>* claims 1-8, 15-21, 24-26 *<br><br>----- | 1,7-9,<br>18,19 | |

TECHNICAL FIELDS SEARCHED (Int. Cl. ³)

C 08 F

The present search report has been drawn up for all claims

| Place of search | Date of completion of the search | Examiner |
|---|---|---|
| THE HAGUE | 19-10-1984 | WEBER H. |